# EUROPÄISCHE PATENTSCHRIFT

(11) **EP 3 854 200 B1**
(45) Veröffentlichungstag und Bekanntmachung des Hinweises auf die Patenterteilung: **16.11.2022**
(21) Anmeldenummer: 20214243.6
(22) Anmeldetag: 15.12.2020
(51) Int. Cl.: A01F 12/26, A01F 12/24, A01F 12/28, A01F 12/18

(54) **DRESCH- ODER SEPARIERANORDNUNG MIT EINEM DEMONTIERBAREN EINSATZ**
THRESHING OR SEPARATING SYSTEM WITH REMOVABLE INSERT
SYSTÈME DE BATTAGE OU SÉPARATION AVEC INSERT DÉMONTABLE

(30) Priorität: 27.01.2020 DE 102020200948
(43) Veröffentlichungstag der Anmeldung: 28.07.2021
(73) Patentinhaber: Deere & Company, Moline, IL 61265 (US)
(72) Erfinder: Broschart, Marco, 68163 Mannheim (DE)
(74) Vertreter: Holst, Sönke

(56) Entgegenhaltungen:
- EP-A1- 1 338 188
- EP-A1- 3 412 138
- EP-B1- 1 338 188
- DE-A1-102016 123 182
- JP-A- 2001 061 335
- US-A1- 2018 084 728

## Beschreibung

Die Erfindung betrifft eine Dresch- oder Separieranordnung, mit einer Dresch- oder Separiertrommel und einem damit zusammenwirkenden Korbzusammenbau, welcher mit einer tragenden Struktur, wenigstens einem lösbar an der tragenden Struktur fixierten oder fixierbaren Einsatz mit einem Siebbelag und wenigstens einer Halterung zur lösbaren Anbringung des Einsatzes an der tragenden Struktur ausgestattet ist, sowie einen damit ausgestatteten Mähdrescher und ein Verfahren zum Ein- und/oder Ausbau eines Einsatzes eines Korbzusammenbaus einer Dresch- oder Separieranordnung.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich üblicherweise aus äußeren Wangen und parallel dazwischen angeordneten Bogenleisten sowie Dreschleisten zusammen, die zwischen sich Zwischenräume belassen, in denen sich parallel zu den Bogenleisten orientierte Korbdrähte befinden. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können, wozu man insbesondere an der Einlassseite des Dreschkorbs austauschbare Einsätze verwendet.

In der EP 3 075 226 A1 wird ein Korbzusammenbau für eine axial oder tangential arbeitende Dresch- oder Separiertrommel beschrieben. Der Korbzusammenbau umfasst eine tragende Struktur, einen lösbar an der tragenden Struktur fixierten oder fixierbaren Einsatz mit einem Siebbelag und eine an der tragenden Struktur schwenkbar angelenkte Halterung zur lösbaren Aufnahme des Einsatzes. Die Halterung ist gegenüber der tragenden Struktur um eine axial (d.h. quer zur Gutflussrichtung) verlaufende Achse zwischen einer Betriebsposition, in welcher der in der Halterung aufgenommene Einsatz in einer zur Erntegutbearbeitung geeigneten Position an der tragenden Struktur angeordnet ist, und einer Zwischenposition schwenkbar, in welcher der Einsatz in Umfangsrichtung des Dresch- oder Separierkorbzusammenbaus (d.h. zumindest näherungsweise parallel zur Gutflussrichtung) in die Halterung einschiebbar und daraus herausziehbar ist.

Durch die verschwenkbare Halterung wird es somit möglich, den Einsatz näher als im Emtebetrieb an die Dresch- oder Separiertrommel zu bringen und nach vom (oder hinten) durch den zwischen dem Einsatz und der Dresch- oder Separiertrommel verbleibenden Spalt aus dem Mähdrescher zu entnehmen. Allerdings ist dieser Spalt nicht besonders groß, insbesondere wenn an der Dreschoder Separiertrommel Füllbleche montiert sind. In derartigen Fällen ist der Ein- und Ausbau des Einsatzes somit problematisch.

Ähnliche Probleme ergeben sich auch bei der Anordnung nach EP 2 457 434 A1, in welcher die Halterung mit einem Exzenter versehen ist, um den Einsatz aus der Betriebsposition in eine angehobene Position zu verbringen und es dem Bediener zu erleichtem, den Einsatz auszubauen.

### Aufgabe

Die der Erfindung zu Grunde liegende Aufgabe wird darin gesehen, den Ein- und/oder Ausbau eines Einsatzes aus einem Korbzusammenbau einer Dresch- oder Separieranordnung zu vereinfachen.

### Erfindung

Die vorliegende Erfindung wird durch die Patentansprüche definiert.

Eine Dresch- oder Separieranordnung ist mit einer Dresch- oder Separiertrommel und einem damit zusammenwirkenden Korbzusammenbau versehen, welcher mit einer tragenden Struktur, wenigstens einem lösbar an der tragenden Struktur fixierten oder fixierbaren Einsatz mit einem Siebbelag und wenigstens einer Halterung zur lösbaren Anbringung des Einsatzes an der tragenden Struktur ausgestattet ist. Es sind Kopplungsmittel bereitgestellt, die konfiguriert sind, den Einsatz mit der Dresch- oder Separiertrommel mechanisch zu verbinden, sodass der Einsatz durch eine Drehung der Dresch- oder Separiertrommel vom Korbzusammenbau in eine davon beabstandete Position, in welcher der Einsatz leicht aus dem Mähdrescher entnommen oder dort positioniert werden kann, verbracht werden kann und/oder aus der beabstandeten Position dem Korbzusammenbau zugeführt werden kann.

Mit anderen Worten erfolgt die Bewegung des Einsatzes aus dem Korbzusammenbau bzw. einer diesem benachbarten (Zwischen-) Stellung aus der Dresch- oder Separieranordnung heraus in eine von der Dresch- oder Separieranordnung beabstandete Position und/oder umgekehrt in der Weise, dass man mittels des Kopplungsmittels eine mechanische Verbindung zwischen dem Einsatz und der Dresch- oder Separiertrommel herstellt und den Einsatz durch Drehen der Dreschoder Separiertrommel zwischen den besagten Positionen bewegt. Auf diese Weise wird der Ausund Einbau des Einsatzes vereinfacht, denn der Bediener muss ihn nicht mehr von Hand aus einer schwer zugänglichen Position (im Korbzusammenbau oder der Zwischenposition, vgl. den übernächsten Absatz) herausbewegen.

Der beschriebene Dresch- oder Separierkorb kann an einem Tangentialdreschwerk Verwendung finden. Er könnte jedoch auch an einem Axialdresch- und/oder -trennrotor benutzt werden.

Die Halterung kann konfiguriert sein, den Einsatz zwischen einer Betriebsposition und einer Zwischenposition zu bewegen, in welcher der Einsatz in eine gegenüber der Betriebsposition der Dresch- oder Separiertrommel angenäherte Position verbracht und durch den zwischen der Dresch- oder Separiertrommel und der tragenden Struktur verbleibenden Spalt vom Korbzusammenbau trennbar und aus der Dresch- oder Separieranordnung ausbaubar ist, und wobei die Kopplungsmittel konfiguriert sind, den Einsatz zwischen der Zwischenposition und der von der Dresch- oder Separieranordnung beabstandeten Position zu bewegen.

Die Halterung ist in der den Einsatz zwischen einer Betriebsposition und einer Zwischenposition bewegenden Ausführungsform demnach schwenkbar an der tragenden Struktur des Dresch- oder Separierkorbs befestigt und kann zwischen einer Betriebsposition und einer Zwischenposition verschwenkt werden. Der Einsatz kann, wenn die Halterung sich in der Zwischenposition befindet, ähnlich wie ein Backblech in einen Backofen geschoben und daraus hinausgezogen wird, in die Halterung eingeschoben und daraus herausgezogen werden. Die Halterung mit dem Einsatz kann nach dem Einschieben des Einsatzes um die axial verlaufende Achse in die Betriebsposition verschwenkt werden. Es findet somit eine kombinierte Einschub- und Schwenkbewegung statt, die den Ein- und Ausbau des Einsatzes erleichtert. Der Einsatz muss beim Einbau lediglich korrekt an der Halterung platziert werden, was durch Drehung der Dresch- oder Separiertrommel und die Koppelmittel geschieht. Die weiteren Schritte laufen unter einer Zwangsführung des Einsatzes durch die Halterung ab und erfordern keine besonders genaue Positionierung des Einsatzes durch den Bediener. Somit findet ein sehr einfacher Ein- und Ausbau des Einsatzes statt.

Die Halterung kann gegenüber der tragenden Struktur um eine axial verlaufende Achse zwischen einer Betriebsposition, in welcher der in der Halterung aufgenommene Einsatz in einer zur Emtegutbearbeitung geeigneten Position an der tragenden Struktur angeordnet ist, und der Zwischenposition schwenkbar sein, in welcher der Einsatz entlang der Umfangsrichtung des Dresch- oder Separierkorbs in die Halterung einschiebbar und daraus herausziehbar ist.

Bei einer anderen Ausführungsform ist die Halterung einfacher ausgebaut und fixiert den Einsatz lediglich in der Betriebsposition an der tragenden Struktur. Somit kann die Halterung beispielsweise aus Schrauben zur form- und/oder kraftschlüssigen Befestigung des Einsatzes an der tragenden Struktur aufgebaut sein oder als Riegel ausgeführt werden. Bei dieser Ausführungsform bewegen die Kopplungsmittel - da die Halterung nur zur Fixierung des Einsatzes an der tragenden Struktur dient und nicht in eine Zwischenposition beweglich ist - den Einsatz aus seiner Betriebsposition in die davon beabstandete Position, in welcher der Einsatz leicht aus dem Mähdrescher entnommen oder dort positioniert werden kann, und umgekehrt.

Die Dresch- oder Separiertrommel kann mittels eines Werkzeugs von Hand oder durch einen fremdkraftbetätigten Antrieb drehbar sein.

Die Kopplungsmittel können temporär (d.h. nur zum Ein- oder Ausbau des Einsatzes) oder dauerhaft mit dem Einsatz und/oder der Dresch- oder Separiertrommel verbindbar sein.

Die Kopplungsmittel können um eine parallel zur Drehachse der Dresch- oder Separiertrommel verlaufende Achse drehbar mit dem Einsatz und/oder der Dresch- oder Separiertrommel verbindbar und durch eine Feder in Richtung auf die Dresch- oder Separiertrommel oder den Einsatz vorgespannt sein. Dadurch erreicht man, dass beim Drehen der Dresch- oder Separiertrommel die mechanische Kopplung zwischen dem Einsatz und der Dresch- oder Separiertrommel hergestellt wird, denn die Kopplungsmittel kommen an der Dresch- oder Separiertrommel bzw. am Einsatz in Anlage, bis sie durch geeignete Merkmale der Dreschoder Separiertrommel bzw. des Einsatzes beim Drehen der Dresch- oder Separiertrommel mitgenommen werden.

Die Kopplungsmittel können hierzu mit einem Mitnehmer oder einer Aussparung ausgestattet sein, die in einen Eingriff mit einer Dreschleiste des Einsatzes oder der Dresch- oder Separiertrommel bringbar ist.

Die Kopplungsmittel können ein Tastrad umfassen, das am Innenumfang des Dreschkorbzusammenbaus abläuft und die Position der Kopplungsmittel gegenüber dem Dreschkorbzusammenbau definiert.

Ein Verfahren zum Ein- und/oder Ausbau eines Einsatzes eines Korbzusammenbaus einer Dreschoder Separieranordnung, die eine Dresch- oder Separiertrommel und einen damit zusammenwirkenden Korbzusammenbau umfasst, welcher mit einer tragenden Struktur, wenigstens einem lösbar an der tragenden Struktur fixierten oder fixierbaren Einsatz mit einem Siebbelag und wenigstens einer Halterung zur lösbaren Anbringung des Einsatzes an der tragenden Struktur ausgestattet ist, zeichnet sich dadurch aus, dass der Einsatz durch Kopplungsmittel mit der Dresch- oder Separiertrommel mechanisch verbunden wird und der Einsatz vermittels einer Drehung der Dresch- oder Separiertrommel vom Korbzusammenbau in eine davon beabstandete Position verbracht und/oder aus der beabstandeten Position dem Korbzusammenbau zugeführt wird.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung heranzuziehen sind. Es zeigt:
- Fig. 1: eine schematische seitliche Ansicht eines Mähdreschers mit einem Tangentialdreschwerk,
- Fig. 2: eine perspektivische Ansicht des Dreschkorbs des Tangentialdreschwerks mit einem eingebauten Einsatz von vorn und oben,
- Fig. 3: eine perspektivische Ansicht des Dreschkorbs des Tangentialdreschwerks mit einem ausgebauten Einsatz von vorn und oben,
- Fig. 4: eine perspektivische Ansicht des vorderen Bereichs des Dreschkorbs mit einer zum Aufnehmen eines Einsatzes ausgeschwenkten Halterung,
- Fig. 5: eine seitliche Ansicht des Dreschkorbs und der Dreschtrommel, in der eine erste Ausführungsform von Kopplungsmitteln zwischen Einsatz und Dreschtrommel dargestellt sind, die dazu dienen, den Einsatz aus dem Dreschwerk auszubauen,
- Fig. 6: eine Ansicht nach Figur 5, jedoch beim Einbau des Einsatzes, und
- Fig. 7: eine seitliche Ansicht des Dreschkorbs und der Dreschtrommel, in der eine zweite Ausführungsform von Kopplungsmitteln dargestellt sind, die dazu dienen, den Einsatz aus dem Dreschwerk auszubauen.

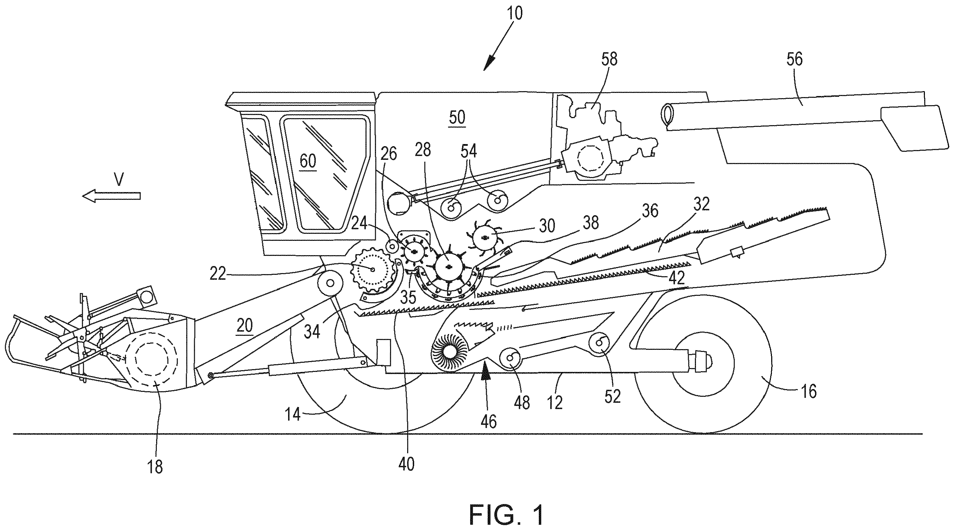

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vom und hinten, auf die Fahrtrichtung V des Mähdreschers 10 im Emtebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorbzusammenbau 34 umgeben. Unterhalb der Fördertrommel 26 ist eine mit Öffnungen versehene oder geschlossene Abdeckung 44 angeordnet, während sich oberhalb der Fördertrommel 26 eine feststehende Abdeckung und unterhalb des Tangentialseparators 28 ein Separierkorb 36 mit oder ohne verstellbare(n) Fingerelementen befindet. Unterhalb der Wendetrommel 30 ist ein Fingerrechen 38 angeordnet, der auch entfallen könnte.

Das durch den Dreschkorbzusammenbau 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

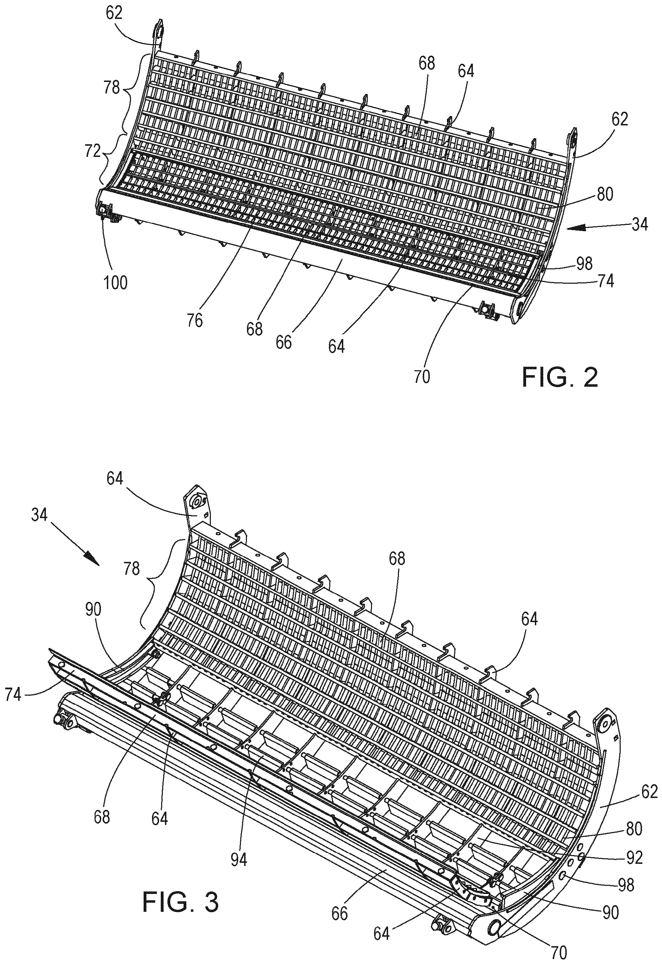

Die Figur 2 zeigt eine perspektivische Ansicht des Dreschkorbs 34 von vom und schräg oben her betrachtet. Dieser oder ein ähnlicher Dreschkorb könnte auch als Separierkorb 36 verwendet werden. Der in der Gutflussrichtung konkav geformte Dreschkorbzusammenbau 34 umfasst seitliche Wangen 62, die parallel zueinander orientiert und voneinander beabstandet sind. Zwischen den Wangen 62 sind Bogenleisten 64 verteilt, die ebenfalls parallel zueinander und zu den Wangen 62 orientiert und voneinander beabstandet sind. Quer zu den Wangen 62 und Bogenleisten 64, d. h. in axialer Richtung des Dreschkorbs 34, sind Dreschleisten 68 vorgesehen. Die Flussrichtung des Ernteguts ist in der Figur 2 von links unten nach rechts oben gerichtet. Die Wangen 62 und die Bogenleisten 64 bilden gemeinsam mit den fest am Dreschkorb angebrachten Dreschleisten 68 des hinteren Dreschabschnitts 78 eine tragende Struktur des Dreschkorbs 34. Richtungsangaben zum Dreschkorbzusammenbau 34, wie axial und radial, beziehen sich auf die Drehachse der Dreschtrommel 22 und die damit zusammenfallende Symmetrieachse des konkav gekrümmten Dreschkorbs 34. Die Gutflussrichtung entspricht der Umfangsrichtung der Dreschtrommel 22 und des Dreschkorbs 34.

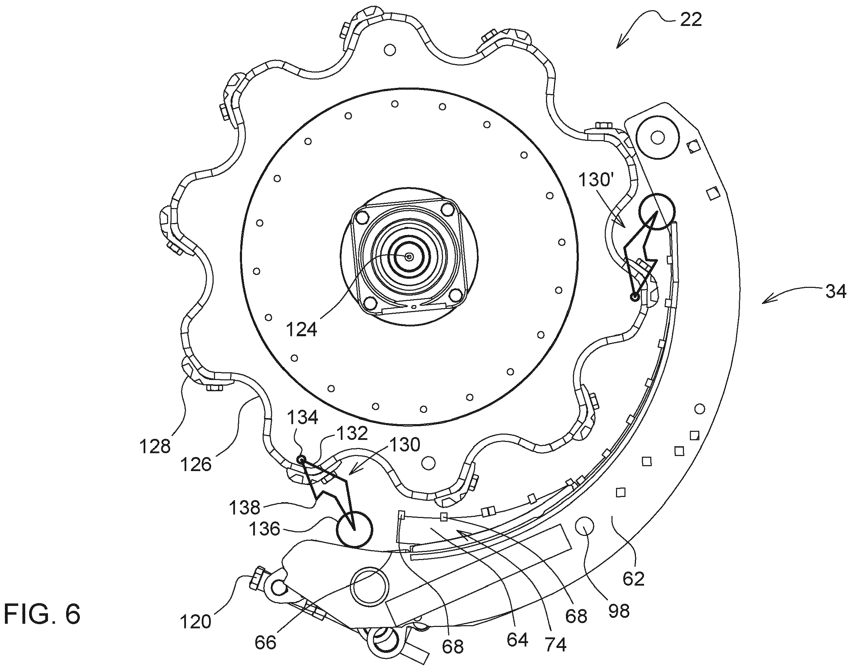

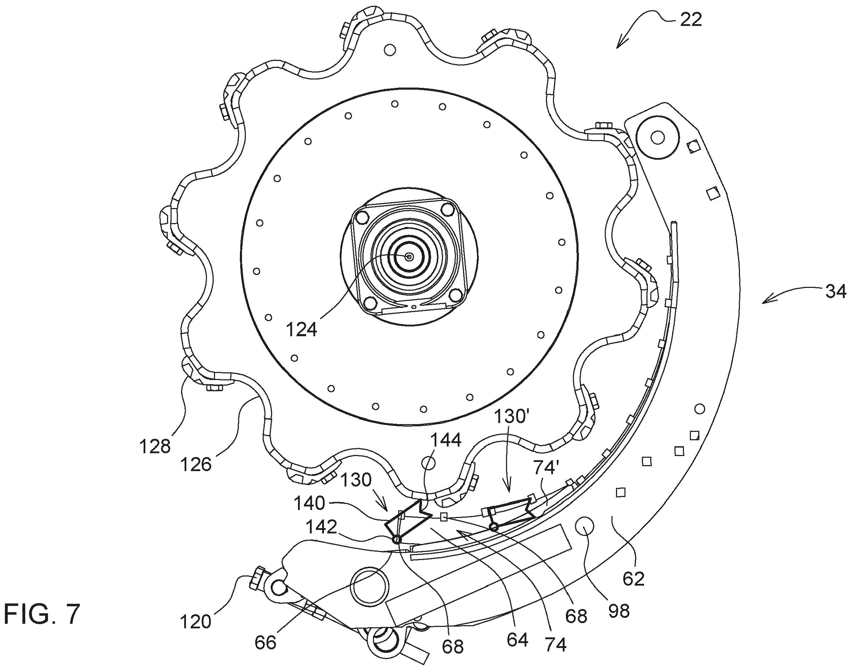

Am in Gutflussrichtung vorderen Ende des Dreschkorbs 34 ist ein konvexes Einlaufblech 66 angebracht, dem eine Reibleiste 70 folgt. Stromab der Reibleiste 70 befindet sich ein vorderer Dreschabschnitt 72, der aus einem einzigen herausnehmbaren und austauschbaren Einsatz 74 aufgebaut ist. Der herausnehmbare Einsatz 74 setzt sich aus einem Rahmen mit sich axial erstreckenden Dreschleisten 68 und sich in Umfangsrichtung des Dreschkorbs 34 erstreckenden Bogenleisten 64 zusammen. Durch die Dreschleisten 68 sind sich in Umfangsrichtung erstreckende Korbdrähte 76 hindurchgeführt, die als Siebbelag dienen. Der herausnehmbare Einsatz 74 kann auch beliebig anders ausgeführt sein und/oder durch andere Einsätze 74 mit anders dimensionierten Durchlassöffnungen und/oder Belägen ausgetauscht oder ersetzt werden, wie sie in den Figuren 6 und 7 der EP 3 075 226 A1 gezeigt sind, deren Offenbarung durch Verweis mit in die vorliegenden Unterlagen aufgenommen wird.

Stromab des vorderen Dreschabschnitts 72 befindet sich der hintere, fest mit den Wangen 62 verbundene Dreschabschnitt 78, der durch die sich zwischen den Wangen 62 erstreckende Dreschleisten 68 und durch die Dreschleisten 68 geführte Korbdrähte 80 aufgebaut ist.

In der Figur 3 ist der Dreschkorbzusammenbau 34 mit ausgebautem Einsatz 74 dargestellt. Es ist erkennbar, dass den Bogenleisten 64 der Einsätze 74 in radialer Richtung nach außen jeweils noch Abschnitte 92 der Bogenleisten 64 und Abschnitte 94 der Dreschleisten 68 der tragenden Struktur des eigentlichen Dreschkorbs 34 folgen, um dessen Stabilität sicherzustellen.

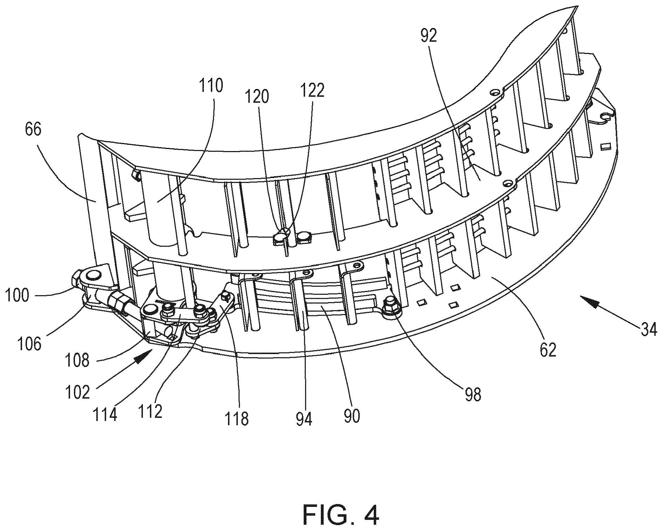

Wie in den Figuren 3 und 4 dargestellt ist, ist der Einsatz 74 durch zwei seitliche Halterungen 90 an der tragenden Struktur des Dreschkorbs 34 befestigbar. Diese Halterungen 90 sind im Querschnitt jeweils U-förmig mit einander zugewandten Öffnungen, sodass die äußeren Bogenleisten 64 des Einsatzes 74 in die Halterungen 90 eingeschoben werden können, vgl. die Figuren 3 und 4. Es wäre in Umkehrung dieser Anordnung auch denkbar, die Halterung 90 mit einem rechteckigen oder anderen Profil zu versehen, auf das ein U-förmiges oder beliebig geformtes, komplementäres Profil des Einsatzes 74 aufschiebbar ist.

Die Halterungen 90 sind ihrerseits an ihren in Umfangsrichtung des Dreschkorbs 34 hinteren Enden um axial (d.h. quer zur Gutflussrichtung im Dreschbetrieb) verlaufende Drehachsen 98 an den seitlichen Wangen 62 schwenkbar angelenkt. Ein der rechten Wange 62 benachbarter Stellantrieb 100, der hier als Stellschraube ausgeführt ist, ist über eine erste Hebelmechanik 102 mit einer in den Wangen 62 um eine axial verlaufende Drehachse drehbar gelagerten Querwelle 104 verbunden. Die einer ersten (hier der rechten) Wange 62 benachbarte erste Hebelmechanik 102 ist über eine zweite Hebelmechanik 118 mit dem vorderen Ende einer ersten (hier der rechten) Halterung 90 gekoppelt. Die Querwelle 104 steht an der zweiten (hier der linken) Wange 62 über eine dort angeordnete, dritte Hebelmechanik (nicht gezeigt), die zur zweiten Hebelmechanik 118 spiegelsymmetrisch ist, mit der zweiten (hier der linken) Halterung 90 gekoppelt.

Die Stellschraube des Stellantriebs 100 ist drehbar in einer vorderen Halterung 106 gelagert, die über das Einlaufblech 66 mit den Wangen 62 verbunden ist, und greift in ein Gewinde in einem Drehhalter 108 ein, der drehbar um ein (seinerseits drehbar an den Wangen 62 gelagertes) Rohr 110 gelagert ist. Bei dem Rohr 110 handelt es sich um eine Welle oder Drehachse zur Verstellung der Reibleiste 70, vgl. DE 10 2014 224 780 A1. Ein Hebel 112 des ersten Hebeltriebs 102 ist einen Endes an einer mit dem Drehhalter 108 verbundenen Trägerplatte 114 angelenkt und anderen Endes starr mit der Querwelle 104 verbunden. Ein Hebel der zweiten Hebelmechanik 118 ist an der Querwelle 104 befestigt und über einen weiteren Hebel an der Halterung 90 angelenkt.

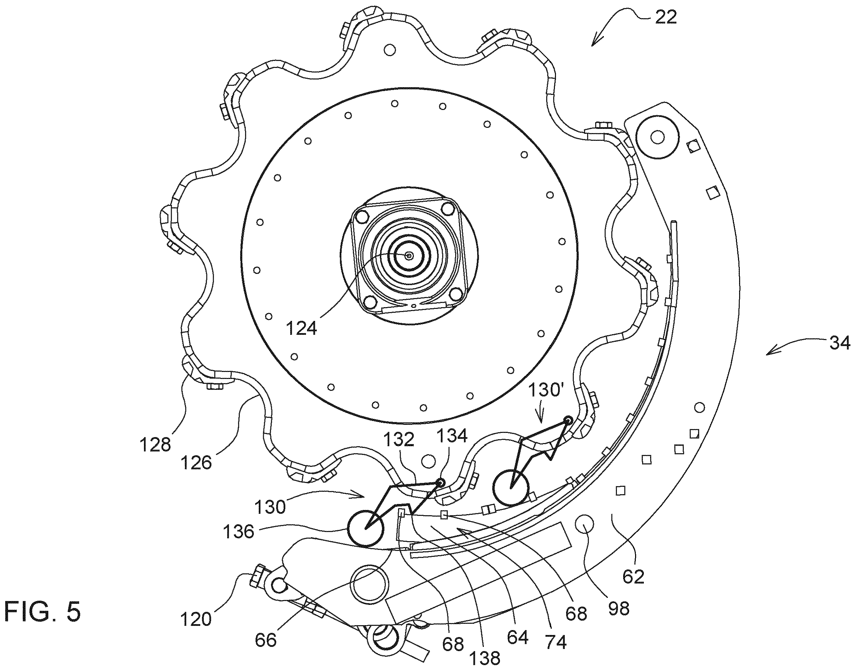

Durch Drehen des Stellantriebs 100 kann der Bediener somit die Halterungen 90 synchron und parallel zueinander um die Achsen 98 verschwenken. Bei einer anderen Ausführungsform könnten die Halterungen 90 auch vereinfacht werden, z.B. wie in der EP 2 457 434 A1 gezeigt, um eine Verstellung des Einsatzes 74 zwischen der beim Ernten eingenommenen Betriebsposition analog der Figur 2 und einer Zwischenposition zu bewerkstelligen, in welcher die Halterung den Einsatz 74 aus der Betriebsposition in Richtung auf die Dreschtrommel 22 in eine Zwischenposition bewegt hat, analog der Figur 3, in welcher der Einsatz 74 sich aus dem Dreschkorbzusammenbau 34 nach vorn entnehmen lässt (vgl. Figuren 5 und 7 von EP 2 457 434 A1, in denen der Einsatz in Betriebsund Zwischenposition gezeigt wird).

Nach alledem ergibt sich folgende Vorgehensweise beim Ausbau des Einsatzes 74: zunächst wird der Dreschkorbspalt zwischen der Dreschtrommel 22 und dem Dreschkorbzusammenbau 34 durch geeignete Mittel (nicht gezeigt) auf ein Maximum eingestellt. Anschließend oder zuvor wird eine Klappe am vorderen Bereich des Mähdreschers 10 geöffnet und/oder der Schrägförderer 20 abgebaut, um Zugang zum Dreschkorbzusammenbau 34 von vorn her zu erhalten. Der Stelltrieb 100 wird betätigt, um die Halterungen 90 mit dem noch darin befindlichen Einsatz 34 in die in den Figuren 3 und 4 gezeigte Zwischenposition zu verbringen. Danach kann der Einsatz 74 aus der Zwischenposition nach vom aus dem Zwischenraum zwischen Dreschtrommel 22 und Dreschkorbzusammenbau 34 herausgezogen und durch einen anderen Einsatz 74 ausgetauscht werden, z.B. um ein anderes Emtegut zu ernten. Der neue Einsatz 74 wird dazu von vorn in die Halterung 90 eingeschoben, bis er an einen hinteren Anschlag anschlägt. Anschließend wird wieder der Verstelltrieb 100 betätigt, um die Halterungen 90 mit dem Einsatz aus der in den Figuren 3 und 4 gezeigten Zwischenposition in die in der Figur 2 gezeigte Betriebsposition zu verbringen, d.h. um die Achsen 98 nach außen zu schwenken.

Bei dieser Schwenkbewegung gerät ein am Abschnitt 92 der Bogenleiste 64 angebrachtes, vom Abschnitt 92 radial nach innen ragendes, mit einer nach hinten und radial nach außen geneigten Schrägung 122 versehenes Element 120 in Anlage mit einer Dreschleiste 68 des Einsatzes 74 und schiebt mit der Schrägung 122 den Einsatz 74 nach hinten in seine Sollposition und hält ihn dort fest. Der Einsatz 74 liegt dann mit seiner hintersten Dreschleiste 68 an der vordersten Dreschleiste 68 des hinteren Dreschbereichs 78 an und ist in Umfangsrichtung des Dreschkorbs 34 zwischen der vordersten Dreschleiste 68 des hinteren Dreschbereichs 78 und dem Element 120 eingeklemmt und fixiert.

Während die bisherigen Ausführungen im Wesentlichen die in der EP 3 075 226 A1 gezeigte Ausführungsform beschreiben, die auch durch jene nach EP 2 457 434 A1 ersetzt werden könnte, bezieht sich die vorliegende Erfindung darauf, wie man den Einsatz 74 aus der Zwischenposition (entspricht der Situation nach Figur 3 und 4, jedoch mit einem noch in der Halterung 90 befindlichen Einsatz 74) aus dieser Zwischenposition aus dem Zwischenraum zwischen Dreschkorbzusammenbau 34 und Dreschtrommel 22 aus dem Mähdrescher 10 hinaus und analog wieder zurück bewegen kann. Dieser Vorgang ist im Stand der Technik insbesondere dann relativ problematisch, wenn die Hülle der um eine feste Achse 124 rotierbaren Dreschtrommel 22 nicht offen, sondern zwischen den Dreschelementen 128 durch Füllbleche 126 geschlossen ist, wie in den Figuren 5 bis 7 gezeigt. Diese Füllbleche werden zur Ernte bestimmter Sonderkulturen verwendet, z.B. für Mais). Der Spalt zwischen dem Einsatz 74 und dem Außenumfang der Dreschtrommel 22 ist somit relativ klein, was den Ein- und Ausbau des Einsatzes 74, der in der Figur 5 in der besagten Zwischenstellung dargestellt ist, erschwert.

Bei der Ausführungsform nach Figur 5 sind Kopplungsmittel 130 vorgesehen, die konfiguriert sind, eine mechanische Verbindung zwischen der Dreschtrommel 22 und dem Einsatz 74 herzustellen. Diese mechanische Verbindung ermöglicht es, die Dreschtrommel 22 von Hand oder durch einen geeigneten Antrieb rückwärts (d.h. entgegen der beim Emtebetrieb verwendeten Drehrichtung) zu drehen, d.h. in der Figur 5 im Uhrzeigersinn, um den Einsatz 74 aus der Zwischenposition aus dem Spalt zwischen der Dreschtrommel 22 und dem Dreschkorbzusammenbau 34 nach vorn in eine Position zu bewegen, in welcher der Einsatz 74 einfacher als aus der Zwischenposition aus dem Mähdrescher 10 entnommen werden kann. Die Drehung der Dreschtrommel 22 kann, wie erwähnt, manuell, nach Auftrennen des Antriebsstrangs der Dreschtrommel 22 (d.h. durch Öffnen einer in den Antriebsstrang der Dreschtrommel 22 eingefügten Kupplung o.ä.) mittels eines Werkzeugs (vgl. beispielsweise EP 1 348 520 A1) oder mittels eines reversierbaren, gegenüber dem Emtebetrieb relativ langsamen fremdkraftbetätigten Antriebs der Dreschtrommel 22 (vgl. DE 198 12 500 A1, in welcher die Dreschtrommel 22 anstelle der dort im letzten Absatz der Beschreibung erwähnten Häckseltrommel 22 treten würde, oder EP 1 072 817 A2) bewerkstelligt werden.

Die lösbar an der Dreschtrommel 22 anbringbaren Kopplungsmittel 130 umfassen einen Körper 132, der um eine parallel zur Drehachse 124 der Dreschtrommel 22 verlaufende Achse 134 schwenkbar an der Dreschtrommel 22 angelenkt und durch die Kraft einer Feder (nicht gezeigt) um die Achse 134 radial nach außen vorgespannt ist. Am Körper 132 ist am von der Achse 134 beabstandeten Ende ein Tastrad 136 angeordnet, das auf der Wange 62 des Dreschkorbzusammenbaus 34 oder einer Bogenleiste 64 des Einsatzes 74 abrollt, je nach Drehstellung der Dreschtrommel 22 und somit des damit verbundenen Kopplungsmittels 130. Zudem umfasst der Körper 132 einen Mitnehmer 138, der konfiguriert ist, in Eingriff mit einer Dreschleiste 68 des Einsatzes 74 (nämlich der in Drehrichtung der Dreschtrommel 22 im Emtebetrieb vordersten, in der Figur 5 ganz links eingezeichneten Dreschleiste 68) zu treten.

Die der Ausführungsform der Figur 5 zugeordnete Vorgehensweise ist derart, dass zur Entnahme des Einsatzes 74 aus der Halterung 90 an beiden Seiten der Dreschtrommel 22 jeweils ein Kopplungsmittel 130 angebracht wird, und zwar koaxial zueinander und insbesondere an einer von außen hinreichend gut zugänglichen Stelle, wie oberhalb des Stellantriebs 100. Anschließend wird die Dreschtrommel 22 der Figur 5 im Uhrzeigersinn (gegenüber dem normalen Erntebetrieb rückwärts) gedreht, bis die Tasträder 136 der Kopplungsmittel 130 nach einer Drehung von ca. 180° an den Innenumfängen der Wangen 62 des Dreschkorbzusammenbaus 34 abrollen. Hierzu können die Kopplungsmittel 130 in ihrem Drehwinkel um die Achsen 134 nach außen begrenzt drehbar sein, sodass am rückwärtigen Ende des Dreschkorbzusammenbaus 34 ein Einfädeln der Tasträder 136 und somit der Kopplungsmittel 130 zwischen Dreschkorbzusammenbau 34 und Dreschtrommel 22 möglich bleibt. Nach einer weiteren Rückwärtsdrehung der Dreschtrommel 22 nehmen die Kopplungsmittel die in der Figur 5 mit 130' gekennzeichnete Position ein, in der die Tasträder 136 auf einer Bogenleiste 64 des Einsatzes 74 abrollen und gelangen bei weiterem Rückwärtsdrehen der Dreschtrommel 22 nach der in Figur 5 mit 130 gekennzeichneten Position in eine Position, in der das Tastrad 136 nicht mehr auf der Bogenleiste 64 des Einsatzes 74, sondern auf dem davor liegenden Bereich der Wange 62 abrollt, sodass die Kopplungsmittel 130 - da der Einsatz 74 sich in der Zwischenposition befindet - sich gegenüber der Dreschtrommel 22 nach außen bewegen und der Mitnehmer 138 unmittelbar oberhalb der Bogenleiste 64 des Einsatzes 74 liegt. Beim weiteren Drehen der Dreschtrommel 22 und der Kopplungsmittel 130 gelangen zunächst die Mitnehmer 138 in Anlage mit der vordersten Dreschleiste 68 des Einsatzes und die Kopplungsmittel 130 nehmen bei der weiteren Drehung der Dreschtrommel 22 den Einsatz 74 mit sich mit und fördern den Einsatz 74 aus dem Zwischenraum zwischen Dreschtrommel 22 und Dreschkorbzusammenbau 34 nach vom, wo ihn der Bediener problemlos ergreifen und aus dem Mähdrescher 10 entnehmen kann.

Anstelle einer Drehung des Dreschkorbs im Uhrzeigersinn wäre auch, ausgehend von einer Position der Kopplungsmittel 130 oberhalb des Stellantriebs 100, eine Drehung der Dreschtrommel im Gegenuhrzeigersinn denkbar. Die Dreschtrommel 22 würde hierbei zumindest in die Position gedreht, in welcher die Mitnehmer 138 sich rechts von der vordersten Dreschleiste 68 des Einsatzes 74 befinden (d.h. etwa in der Position, in der sich die Kopplungsmittel 130 in der Figur 5 befinden) und von dort aus wieder im Uhrzeigersinn zurückgedreht. Dabei nehmen die Kopplungsmittel 130 den Einsatz 74 an der vordersten Dreschleiste 68 mit sich mit und fördern ihn aus dem Zwischenraum zwischen Dreschtrommel 22 und Dreschkorbzusammenbau 34 nach vom, wo ihn der Bediener problemlos ergreifen und aus dem Mähdrescher 10 entnehmen kann. Bei dieser Vorgehensweise könnte das Tastrad 136 auch entfallen.

Wie die Figur 6 zeigt, kann beim Einbau des Einsatzes 74 analog vorgegangen werden. Hierzu sind die Kopplungsmittel 130 jedoch um 180° gedreht an der Dreschtrommel 22 anzubringen. Ausgehend von einer von außen hinreichend gut zugänglichen Stelle, wie oberhalb des Stellantriebs 100, wird die Dreschtrommel 22 im Uhrzeigersinn gedreht, sodass die Mitnehmer 138 nach einer Drehung der Dreschtrommel 22 von einigen 10° im Eingriff mit der vordersten Dreschleiste 68 des Einsatzes 74 geraten und den Einsatz 74, der durch den Bediener lediglich oberhalb des Einlaufblechs 66 zu positionieren ist, mit sich nehmen und in die Zwischenposition verbringen, aus welcher er in der oben beschriebenen Weise in die Ernteposition verbringbar ist. Anschließend kann die Dreschtrommel 22 wieder (im Uhrzeigersinn) zurückgedreht werden (dann wäre das Tastrad 136 ebenfalls nicht vonnöten und könnte entfallen), oder sie wird um fast 360° weiter im Gegenuhrzeigersinn gedreht, um die Kopplungsmittel 130 wieder von der Dreschtrommel 22 abnehmen zu können. Dabei gelangt der Mitnehmer 138 durch die Form der Wangen 62 und des Tastrades 136 außer Eingriff mit der Dreschleiste 68 des Einsatzes 74, wenn dieser die Zwischenstellung erreicht hat, wie anhand der mit 130' gekennzeichneten Kopplungsmittel erkennbar ist.

Bei der Ausführungsform nach Figur 7 sind die Kopplungsmittel 130 nicht an der Dreschtrommel 22, sondern am Einsatz 74 befestigt. Sie umfassen einen Körper 140, der um eine parallel zur Drehachse 124 der Dreschtrommel 22 verlaufende Achse am vorderen, unteren Ende des Einsatzes 74 angelenkt ist und durch eine Feder (nicht gezeigt) im Gegenuhrzeigersinn in Richtung auf die Dreschtrommel 22 zu vorgespannt ist. Der Körper 140 umfasst eine Aussparung 144, die komplementär zu einer Dreschleiste 128 der Dreschtrommel 22 ist, sodass man durch Rückwärtsdrehen der Dreschtrommel 22 den Einsatz 74 aus der Zwischenposition der Figur 6 nach links bewegen kann, um ihn aus dem Mähdrescher 10 entnehmen zu können. Die Kopplungsmittel 130 können vom Einsatz 74 abnehmbar sein und nur bei Bedarf daran angebracht werden oder sie werden durch entsprechende Mittel in einer inaktiven Stellung am Einsatz 74 festgesetzt, damit sie nicht im Erntebetrieb laufend gegen die Dreschleisten 128 der Dreschtrommel 22 in Anlage kommen. Diese Mittel werden dann bei Bedarf zum Ausbau des Einsatzes 74 durch den Bediener z.B. von der Seite her deaktiviert.

In der Ausführungsform nach Figur 7 ist ein zweiter Einsatz 74' ist mit einem eigenen Kopplungsmittel 130'rückwärtig des ersten Einsatzes 74 vorgesehen. Die Kopplungsmittel 130' des zweiten Einsatzes 74' sind, solange der erste Einsatz 74 am zweiten Einsatz 74' anliegt, durch den ersten Einsatz 74 in eine inaktive Position vorgespannt. Erst wenn der erste Einsatz 74 aus der Zwischenposition nach links entnommen ist, gelangen die Kopplungsmittel 130' des zweiten Einsatzes 74' in eine aktive Stellung, in der sie durch ihre Feder nach innen, in Richtung auf die Dreschtrommel 22 zu, bewegt werden. Somit kann auch nach dem Ausbau des ersten Einsatzes 74 der zweite Einsatz 74' mittels der ihm zugeordneten Kopplungsmittel 130' durch Rückwärtsdrehen der Dreschtrommel 22 aus der Halterung 90 entnommen werden.

Bei der Ausführungsform nach Figur 7 ist es somit möglich, mehrere Einsätze 74, 74' in Drehrichtung der Dreschtrommel 22 hintereinander anzuordnen, die jeweils mit Kopplungsmitteln 130, 130' ausgestattet sind und nacheinander in der oben beschriebenen Weise aus der Zwischenposition entnommen bzw. in diese gebracht werden können. Alternativ wäre es (auch bei der Ausführungsform der Figur 5 und 6) auch möglich, die Einsätze 74 länger als dargestellt zu wählen, sodass sie sich in der Drehrichtung der Dreschtrommel 22 auch über die gesamte Länge des Dreschkorbzusammenbaus 34 erstrecken können, wozu die Halterung 90 entsprechend lang auszuführen wäre. Hierbei können die Einsätze 74 einteilig gestaltet sein oder sich aus mehreren um eine parallel zur Achse 124 verlaufende Achse gelenkig untereinander verbundenen Segmenten aufgebaut sein, die nach Ausbau voneinander trennbar sein können.

Auch bei der Ausführungsform nach Figur 7 könnte man die Kopplungsmittel 130 um 180° drehen, analog zur Ausführungsform nach Figur 5 und 6, um sie zum Einbau des Einsatzes 74 zu nutzen. Die Kopplungsmittel 130 würden sich dann vom Einsatz 74 nach vom und oben erstrecken und durch die Federkraft im Uhrzeigersinn vorgespannt, damit sie ggf. durch die Dreschleiste128 der Dreschtrommel 22 aus einer Position oberhalb des Einlaufbleches 66 in die Zwischenposition bewegt werden können. Die Kopplungsmittel 130 der Figur 7 können permanent am Einsatz 74 verbleiben, wenn sie in einer inaktiven Stellung (wie mit 130' in der Figur 7 gezeigt) arretierbar sind, im Falle des ersten Einsatzes 74 z.B. durch einen Riegel oder Stift.

## Patentansprüche

1. Dresch- oder Separieranordnung, mit einer Dresch- oder Separiertrommel (22) und einem damit zusammenwirkenden Korbzusammenbau (34), welcher mit einer tragenden Struktur, wenigstens einem lösbar an der tragenden Struktur fixierten oder fixierbaren Einsatz (74) mit einem Siebbelag und wenigstens einer Halterung (90) zur lösbaren Anbringung des Einsatzes (74) an der tragenden Struktur ausgestattet ist, **gekennzeichnet durch** Kopplungsmittel (130, 130'), die konfiguriert sind, den Einsatz (74) mit der Dresch- oder Separiertrommel (22) mechanisch zu verbinden und den Einsatz (74) vermittels einer Drehung der Dresch- oder Separiertrommel (22) vom Korbzusammenbau (34) in eine davon beabstandete Position zu verbringen und/oder aus der beabstandeten Position dem Korbzusammenbau (34) zuzuführen.

2. Dresch- oder Separieranordnung nach Anspruch 1, wobei die Halterung (90) konfiguriert ist, den Einsatz (74) zwischen einer Betriebsposition und einer Zwischenposition zu bewegen, in welcher der Einsatz (74) in eine gegenüber der Betriebsposition der Dreschoder Separiertrommel (22) angenäherte Position verbracht und durch den zwischen der Dresch- oder Separiertrommel (22) und der tragenden Struktur verbleibenden Spalt vom Korbzusammenbau (34) trennbar und aus der Dresch- oder Separieranordnung ausbaubar ist, und wobei die Kopplungsmittel (130, 130') konfiguriert sind, den Einsatz (74) zwischen der Zwischenposition und der von der Dresch- oder Separieranordnung beabstandeten Position zu bewegen.

3. Dresch- oder Separieranordnung nach Anspruch 2, wobei die Halterung (90) gegenüber der tragenden Struktur um eine axial verlaufende Achse (98) zwischen einer Betriebsposition, in welcher der in der Halterung (90) aufgenommene Einsatz (74) in einer zur Emtegutbearbeitung geeigneten Position an der tragenden Struktur angeordnet ist, und der Zwischenposition schwenkbar ist, in welcher der Einsatz (74) entlang der Umfangsrichtung des Dresch- oder Separierkorbs (34) in die Halterung (90) einschiebbar und daraus herausziehbar ist.

4. Dresch- oder Separieranordnung nach einem der vorhergehenden Ansprüche, wobei die Dresch- oder Separiertrommel (22) mittels eines Werkzeugs von Hand oder durch einen fremdkraftbetätigten Antrieb drehbar ist.

5. Dresch- oder Separieranordnung nach einem der vorhergehenden Ansprüche, wobei die Kopplungsmittel (130, 130') temporär oder dauerhaft mit dem Einsatz (74) und/oder der Dresch- oder Separiertrommel (22) verbindbar sind.

6. Dresch- oder Separieranordnung nach einem der vorhergehenden Ansprüche, wobei die Kopplungsmittel (130, 130') um eine parallel zur Drehachse der Dresch- oder Separiertrommel (22) verlaufende Achse drehbar mit dem Einsatz (74) und/oder der Dresch- oder Separiertrommel (22) verbindbar sind und durch eine Feder in Richtung auf die Dresch- oder Separiertrommel (22) oder den Einsatz (74) vorgespannt sind.

7. Dresch- oder Separieranordnung nach einem der vorhergehenden Ansprüche, wobei die Kopplungsmittel (130, 130') mit einem Mitnehmer (138) oder einer Aussparung (144) ausgestattet sind, die in einen Eingriff mit einer Dreschleiste (68, 128) des Einsatzes (74) oder der Dresch- oder Separiertrommel (22) bringbar ist.

8. Dresch- oder Separieranordnung nach einem der vorhergehenden Ansprüche, wobei die Kopplungsmittel (130, 130') ein Tastrad (136) umfassen, das am Innenumfang des Dreschkorbzusammenbaus (34) abläuft und die Position der Kopplungsmittel (130, 130') gegenüber dem Dreschkorbzusammenbau (34) definiert.

9. Mähdrescher (10) mit einer Dresch- oder Separieranordnung nach einem der vorhergehenden Ansprüche.

10. Verfahren zum Ein- und/oder Ausbau eines Einsatzes (74) eines Korbzusammenbaus (34) einer Dresch- oder Separieranordnung, die eine Dresch- oder Separiertrommel (22) und einen damit zusammenwirkenden Korbzusammenbau (34) umfasst, welcher mit einer tragenden Struktur, wenigstens einem lösbar an der tragenden Struktur fixierten oder fixierbaren Einsatz (74) mit einem Siebbelag und wenigstens einer Halterung (90) zur lösbaren Anbringung des Einsatzes (74) an der tragenden Struktur ausgestattet ist, **dadurch gekennzeichnet, dass** der Einsatz (74) durch Kopplungsmittel (130, 130') mit der Dresch- oder Separiertrommel (22) mechanisch verbunden wird und der Einsatz (74) vermittels einer Drehung der Dresch- oder Separiertrommel (22) vom Korbzusammenbau (34) in eine davon beabstandete Position verbracht und/oder aus der beabstandeten Position dem Korbzusammenbau (34) zugeführt wird.

## Claims

1. Threshing or separating system, comprising a threshing or separating drum (22) and a concave (34) interacting therewith, which is configured with a supporting structure, at least one insert (74) that is or can be fixed detachably to the supporting structure and has a screen cover and at least one holder (90) for the detachable attachment of the insert (74) to the supporting structure, **characterized by** coupling means (130, 130'), which are configured to connect the insert (74) mechanically to the threshing or separating drum (22) and, by means of a rotation of the threshing or separating drum (22), to move the insert (74) from the concave (34) into a position spaced apart from the latter and/or to feed the same to the concave (34) from the spaced-apart position.

2. Threshing or separating system according to Claim 1, wherein the holder (90) is configured to move the insert (74) between an operating position and an intermediate position, in which the insert (74) is moved into a position nearer to the operating position of the threshing or separating drum (22) and can be separated from the concave (34) through the gap remaining between the threshing or separating drum (22) and the supporting structure and can be removed from the threshing or separating system, and wherein the coupling means (130, 130') are configured to move the insert (74) between the intermediate position and the position spaced apart from the threshing or separating system.

3. Threshing or separating system according to Claim 2, wherein the holder (90) can be pivoted with respect to the supporting structure about an axis (98) extending axially, between an operating position, in which the insert (74) held in the holder (90) is arranged in a position on the supporting structure that is suitable for crop processing, and the intermediate position, in which the insert (74) can be pushed into and pulled out of the holder (90) along the circumferential direction of the threshing or separating basket (34).

4. Threshing or separating system according to one of the preceding claims, wherein the threshing or separating drum (22) can be rotated manually by means of a tool or by an externally powered drive.

5. Threshing or separating system according to one of the preceding claims, wherein the coupling means (130, 130') can be connected temporarily or permanently to the insert (74) and/or the threshing or separating drum (22).

6. Threshing and separating system according to one of the preceding claims, wherein the coupling means (130, 130') can be connected to the insert (74) and/or the threshing or separating drum (22) so as to be rotatable about an axis extending parallel to the axis of rotation of the threshing or separating drum (22), and are preloaded by a spring in the direction of the threshing or separating drum (22) or the insert (74).

7. Threshing and separating system according to one of the preceding claims, wherein the coupling means (130, 130') are equipped with a driver (138) or a recess (144) which can be brought into engagement with a threshing bar (68, 128) of the insert (74) or the threshing or separating drum (22).

8. Threshing or separating system according to one of the preceding claims, wherein the coupling means (130, 130') comprise a feeler wheel (136), which runs on the inner circumference of the threshing concave (34) and defines the position of the coupling means (130, 130') with respect to the threshing concave (34).

9. Combine harvester (10) having a threshing or separating system according to one of the preceding claims.

10. Method for inserting and/or removing an insert (74) of a concave (34) of a threshing or separating system which comprises a threshing or separating drum (22) and a concave (34) interacting therewith which is configured with a supporting structure, at least one insert (74) that is or can be fixed detachably to the supporting structure and has a screen cover and at least one holder (90) for the detachable attachment of the insert (74) to the supporting structure, **characterized in that** the insert (74) is connected mechanically to the threshing or separating drum (22) by coupling means (130, 130') and, by means of a rotation of the threshing or separating drum (22), the insert (74) is moved from the concave (34) into a position spaced apart from the latter and/or fed to the concave (34) from the spaced-part position.

## Revendications

1. Agencement de battage ou de séparation, comprenant un tambour de battage ou de séparation (22) et un ensemble de contre-batteur (34) coopérant avec celui-ci, lequel est équipé d'une structure porteuse, d'au moins un insert (74) fixé ou pouvant être fixé de manière amovible à la structure porteuse, comprenant une garniture de tamisage, et d'au moins un support (90) pour disposer de manière amovible l'insert (74) sur la structure porteuse, **caractérisé par** des moyens d'accouplement (130, 130') qui sont configurés pour relier mécaniquement l'insert (74) au tambour de battage ou de séparation (22) et pour transférer l'insert (74) de l'ensemble de contre-batteur (34) à une position espacée de celui-ci et/ou pour l'amener de la position espacée à l'ensemble de contre-batteur (34) au moyen d'une rotation du tambour de battage ou de séparation (22)

2. Agencement de battage ou de séparation selon la revendication 1, dans lequel le support (90) est configuré pour déplacer l'insert (74) entre une position de fonctionnement et une position intermédiaire dans laquelle l'insert (74) est transféré vers une position rapprochée du tambour de battage ou de séparation par rapport à la position de fonctionnement (22) et peut être séparé de l'ensemble de contre-batteur (34) par l'espace restant entre le tambour de battage ou de séparation (22) et la structure porteuse et peut être retiré de l'agencement de battage ou de séparation, et dans lequel les moyens d'accouplement (130, 130') sont configurés pour déplacer l'insert (74) entre la position intermédiaire et la position espacée de l'agencement de battage ou de séparation.

3. Agencement de battage ou de séparation selon la revendication 2, dans lequel le support (90) peut pivoter par rapport à la structure porteuse autour d'un axe (98) s'étendant axialement entre une position de fonctionnement, dans laquelle l'insert (74) reçu dans le support (90) est agencé sur la structure porteuse dans une position appropriée pour le traitement du produit récolté, et la position intermédiaire, dans laquelle l'insert (74) peut être inséré dans le support (90) et extrait de celui-ci le long de la direction circonférentielle du contre-batteur ou du panier de séparation (34).

4. Agencement de battage ou de séparation selon l'une quelconque des revendications précédentes, dans lequel le tambour de battage ou de séparation (22) peut être mis en rotation manuellement au moyen d'un outil ou par un entraînement actionné par une force externe.

5. Agencement de battage ou de séparation selon l'une quelconque des revendications précédentes, dans lequel les moyens d'accouplement (130, 130') peuvent être reliés temporairement ou en permanence à l'insert (74) et/ou au tambour de battage ou de séparation (22).

6. Agencement de battage ou de séparation selon l'une quelconque des revendications précédentes, dans lequel les moyens d'accouplement (130, 130') peuvent être reliés à l'insert (74) et/ou au tambour de battage ou de séparation (22) de manière à pouvoir tourner autour d'un axe s'étendant parallèlement à l'axe de rotation du tambour de battage ou de séparation (22) et sont précontraints par un ressort en direction du tambour de battage ou de séparation (22) ou de l'insert (74).

7. Agencement de battage ou de séparation selon l'une quelconque des revendications précédentes, dans lequel les moyens d'accouplement (130, 130') sont équipés d'un entraîneur (138) ou d'un évidement (144) qui peut être mis en prise avec une barre de battage (68, 128) de l'insert (74) ou du tambour de battage ou de séparation (22) .

8. Agencement de battage ou de séparation selon l'une quelconque des revendications précédentes, dans lequel les moyens d'accouplement (130, 130') comprennent une roue de jauge (136) qui parcoure la circonférence intérieure de l'ensemble de contre-batteur (34) et définit la position des moyens d'accouplement (130, 130') par rapport à l'ensemble de contre-batteur (34).

9. Moissonneuse-batteuse (10) comprenant un agencement de battage ou de séparation selon l'une quelconque des revendications précédentes.

10. Procédé de montage et/ou de démontage d'un insert (74) d'un ensemble de contre-batteur (34) d'un agencement de battage ou de séparation qui comprend un tambour de battage ou de séparation (22) et un ensemble de contre-batteur (34) coopérant avec celui-ci, lequel est équipé d'une structure porteuse, d'au moins un insert (74) fixé ou pouvant être fixé de manière amovible à la structure porteuse, comprenant une garniture de tamisage, et d'au moins un support (90) pour disposer de manière amovible l'insert (74) sur la structure porteuse, **caractérisé en ce que** l'insert (74) est relié mécaniquement au tambour de battage ou de séparation (22) par des moyens d'accouplement (130, 130') et l'insert (74) est transféré de l'ensemble de contre-batteur (34) à une position espacée de celui-ci et/ou est amené de la position espacée à l'ensemble de contre-batteur (34) au moyen d'une rotation du tambour de battage ou de séparation (22) .
